# FASCICULE DE BREVET EUROPEEN

(11) **EP 4 347 324 B1**
(45) Date de publication et mention de la délivrance du brevet: **14.01.2026**
(21) Numéro de dépôt: 22722319.5
(22) Date de dépôt: 15.04.2022
(51) Int. Cl.: B60R 25/10

(54) **PROCÉDÉ DE CONTRÔLE D'UNE ALARME POUR VÉHICULE AUTOMOBILE**
VERFAHREN ZUR STEUERUNG EINES ALARMS FÜR EIN KRAFTFAHRZEUG
METHOD FOR CONTROLLING AN ALARM FOR A MOTOR VEHICLE

(30) Priorité: 01.06.2021 FR 2105747
(43) Date de publication de la demande: 10.04.2024
(73) Titulaire: Stellantis Auto SAS, 78300 Poissy (FR)
(72) Inventeur: MALVY, Thomas, 70110 ATHESANS ETROITEFONTAINE (FR)
(74) Mandataire: ESIP
(86) Numéro de dépôt international: PCT/FR2022/050713
(87) Numéro de publication internationale: WO 2022/254106

(56) Documents cités:
- WO-A1-2006/103795
- US-A1- 2002 109 408
- US-A1- 2004 217 849
- US-A1- 2006 244 576
- US-B2- 7 567 166
- US-B2- 7 646 287

## Description

La présente invention revendique la priorité de la demande française 2105747 déposée le 01.06.2021.

Le contexte technique de la présente invention est celui des systèmes d'alarme pour véhicules automobiles. Plus particulièrement, l'invention a trait à un procédé de contrôle d'une alarme pour véhicule automobile, ainsi qu'à un système d'alarme.

Dans l'état de la technique, comme par exemple décrit dans US 2006/0244576A, on connait un véhicule automobile équipé d'un système d'alarme permettant de détecter une utilisation anormale du véhicule automobile, notamment lorsqu'il n'est pas utilisé ou lorsqu'il est stationné sans occupants à bord. En particulier, on connait des systèmes d'alarme comportant une fonction volumétrique qui permet, lorsque de tels systèmes d'alarme sont activés, de détecter un mouvement à l'intérieur du véhicule automobile, et de déclencher dans une telle situation, un avertisseur, par exemple du type d'une sirène.

Complémentairement ou alternativement, on connait aussi des systèmes d'alarme comportant une fonction anti-soulèvement qui permet, lorsque de tels systèmes d'alarme sont activés, de détecter un déplacement vertical et/ou une variation d'inclinaison du véhicule automobile, et de déclencher dans une telle situation, un avertisseur, par exemple du type d'une sirène.

De tels systèmes d'alarme équipés d'une fonction anti-soulèvement sont ainsi très sensibles aux variations d'inclinaison du véhicule automobile, et conduisent généralement à un déclenchement de l'avertisseur lorsque l'inclinaison du véhicule automobile varie de quelques dixièmes de degrés seulement.

Durant une phase de pré-conditionnement du véhicule automobile qui conduit à activer le chauffage ou la climatisation du véhicule automobile alors que ce dernier est toujours verrouillé, l'activation d'un organe de ventilation ou d'un groupe climatisation nécessite le démarrage du moteur thermique du véhicule automobile afin de pouvoir chauffer ou refroidir l'habitacle du véhicule automobile. Or l'organe de ventilation et le groupe climatisation sont activé par une courroie d'accessoire couplée avec le moteur thermique. Aussi, afin d'activer ses fonctionnalités durant la phase de pré-conditionnement, il est nécessaire de démarrer le moteur thermique alors que le véhicule automobile est toujours verrouillé.

Or, l'activation du moteur thermique provoque des vibrations qui ont pour conséquent de générer des inclinaisons du véhicule automobile selon des amplitudes supérieures aux seuils de déclenchement, conduisant à une activation de l'avertisseur par la simple activation de l'organe de ventilation ou du groupe climatisation.

Cette situation n'est pas souhaitée.

La présente invention a pour objet de proposer un nouveau procédé de contrôle d'une alarme pour véhicule automobile afin de répondre au moins en grande partie aux problèmes précédents et de conduire en outre à d'autres avantages.

Un autre but de l'invention est d'empêcher une telle alarme de se déclencher durant la phase de pré-conditionnement du véhicule automobile.

Un autre but de l'invention est de proposer un procédé de contrôle qui soit facilement déployable sur de nombreux types de véhicules automobiles.

Selon un premier aspect de l'invention, on atteint au moins l'un des objectifs précités avec un procédé de contrôle d'un système d'alarme pour véhicule automobile, le procédé de contrôle comportant une étape de configuration d'au moins un seuil d'inclinaison du véhicule automobile au-delà duquel le système d'alarme est activé en fonction d'au moins un état de fonctionnement d'un moteur dudit véhicule automobile.

Au sens de l'invention, le système d'alarme est configuré pour permettre de détecter une inclinaison non souhaitée du véhicule automobile, par exemple lorsque le véhicule automobile dans lequel le système d'alarme est destiné à être intégré, et le système d'alarme est aussi configuré pour permettre le déclenchement d'un avertisseur en cas de dépassement du seuil d'inclinaison.

Dans le contexte de l'invention, l'avertisseur peut être de n'importe quel type, par exemple de type visuel et/ou sonore, mis en œuvre à proximité du véhicule automobile ou à distance de celui-ci.

Le seuil d'inclinaison est une valeur limite d'inclinaison du véhicule automobile, selon un axe longitudinal ou latéral dudit véhicule automobile, au-delà de laquelle le système d'alarme interprète une telle inclinaison du véhicule automobile comme étant associée à une effraction du véhicule automobile, conduisant à la nécessité de déclencher l'avertisseur.

On entend une inclinaison du véhicule automobile comme un penchement, une déclivité du véhicule automobile entre un premier côté et un deuxième côté, relativement à un axe d'inclinaison. Un tel axe d'inclinaison peut être considéré comme étant parallèle à un axe longitudinal du véhicule automobile et qui s'étend depuis un côté arrière vers un côté avant du véhicule automobile, ou comme étant parallèle à un axe latéral du véhicule automobile et qui s'étend depuis un côté gauche vers un côté droit du véhicule automobile. Eventuellement, un axe d'inclinaison peut être pris comme une combinaison de l'axe latéral et de l'axe longitudinal du véhicule automobile.

Dans le contexte de l'invention, le seuil de l'invention peut être défini de manière identique pour plusieurs axes d'inclinaison du véhicule automobile, ou de manière différentes pour chaque axe d'inclinaison.

De manière astucieuse, l'invention permet de configurer un niveau de déclenchement du système d'alarme en fonction d'un état de fonctionnement du moteur du véhicule automobile.

Le moteur est ici compris comme étant le moteur principal du véhicule automobile, celui qui met en rotation le train de traction du véhicule automobile et qui permet de propulser ledit véhicule automobile. De manière préférentielle, mais non limitative au contexte de l'invention, le moteur est du type d'un moteur thermique. Alternativement, le moteur est du type d'un moteur électrique.

L'état de fonctionnement du moteur du véhicule automobile correspond plus particulièrement à l'état d'une variable descriptive du groupe moto-propulseur et accessible sur un réseau interconnecté local du véhicule automobile. Ainsi, le procédé selon l'invention lit et interprète cette variable afin de définir une valeur du seuil d'inclinaison à partir duquel le déclenchement de l'avertisseur du système d'alarme est piloté.

Dans la description qui suit, l'activation du système d'alarme s'entend comme l'activation de l'avertisseur du système d'alarme.

Le procédé de contrôle conforme au premier aspect de l'invention comprend avantageusement au moins un des perfectionnements ci-dessous, les caractéristiques techniques formant ces perfectionnements pouvant être prises seules ou en combinaison :
- si l'état de fonctionnement du moteur est arrêté, le moteur n'étant pas en rotation, alors le seuil d'inclinaison est défini à un premier seuil d'inclinaison, et si l'état de fonctionnement du moteur est en cours de démarrage, le moteur passant d'un état non rotatif à un état rotatif au travers d'une phase transitoire d'accélération, alors le seuil d'inclinaison est défini à un second seuil d'inclinaison différent du premier seuil d'inclinaison. Le moteur arrêté est associé à un premier état de fonctionnement. Il correspond à une situation durant laquelle le véhicule automobile est immobilisé, moteur arrêté et sans clef de contact engagée. Ce premier état de fonctionnement correspond généralement à la situation durant laquelle le véhicule automobile est stationné sur une aire de stationnement, le véhicule automobile étant verrouillé. Le moteur en cours de démarrage est associé à un deuxième état de fonctionnement. Il correspond à la situation durant laquelle la clef de contact est engagée et on amorce un démarrage du moteur. Celui-ci entre alors en rotation et s'accélère jusqu'à atteindre un régime nominal, le véhicule automobile étant préférentiellement à l'arrêt durant cette phase transitoire. Durant cette phase, associée au deuxième état de fonctionnement, des vibrations induites par la mise en rotation du moteur peuvent déclencher de manière inappropriée l'avertisseur du système d'alarme, comme dans les systèmes d'alarmes existant. Ainsi, l'invention permet de définir un seuil de déclenchement du système d'alarme - associé à un seuil d'inclinaison du véhicule automobile - supérieur à celui qui est défini lorsque le véhicule automobile est en stationnement, dans le premier état de fonctionnement du moteur ;
- une valeur du premier seuil d'inclinaison est minimale. Par exemple la valeur du premier seuil d'inclinaison est égale à un dixième de degré ou à quelques dixièmes de degrés. La valeur du premier seuil, ainsi que de tous les autres dans le contexte de l'invention, varie en fonction du type de véhicule automobile considéré. En d'autres termes, le premier seuil d'inclinaison est la plus petite valeur d'inclinaison au-delà de laquelle le système d'alarme du véhicule automobile est activé. Tous les autres seuil d'inclinaison définis dans le contexte de l'invention présentent des valeurs supérieures à celle du premier seuil. En d'autres termes, une sensibilité de déclenchement du système d'alarme est maximale lorsque l'état de fonctionnement du moteur du véhicule automobile est arrêté. En d'autres termes encore, la valeur d'inclinaison du véhicule automobile au-delà de laquelle l'avertisseur du système d'alarme est déclenché est, pour le premier mode de fonctionnement du moteur du véhicule automobile, inférieure à toutes les autres valeurs d'inclinaison du véhicule automobile au-delà desquelles l'avertisseur du système d'alarme est déclenché, pour tous les autres modes de fonctionnement du moteur ;
- en particulier, une valeur du second seuil d'inclinaison est supérieure à la valeur du premier seuil d'inclinaison ;
- un écart entre le premier seuil d'inclinaison et le second seuil d'inclinaison est compris entre 15% et 25% d'une valeur du premier seuil d'inclinaison. Préférentiellement, un écart entre le premier seuil d'inclinaison et le second seuil d'inclinaison est égal à 20% d'une valeur du premier seuil d'inclinaison. A titre d'exemple non limitatif, si la valeur du premier seuil d'inclinaison est d'un dixième de degré, alors le second seuil d'inclinaison est préférentiellement égal à douze centièmes de degrés. Cette configuration avantageuse permet d'éviter que les vibrations introduites par l'amorçage d'une rotation du moteur durant son démarrage ne déclenchent l'avertisseur du système d'alarme de manière intempestive ;
- si l'état de fonctionnement du moteur est en cours de fonctionnement nominal, le moteur étant en rotation, alors le seuil d'inclinaison est défini à un troisième seuil d'inclinaison, une valeur du troisième seuil d'inclinaison étant comprise entre la valeur du premier seuil d'inclinaison et de celle du second seuil d'inclinaison. Le moteur en cours de fonctionnement nominal est associé à un troisième état de fonctionnement. Il correspond à une situation durant laquelle le véhicule automobile est en cours d'utilisation, par exemple en cours de roulage ou durant une phase postérieure à la phase de démarrage dudit véhicule automobile. Le moteur est en rotation selon un régime établi et stable ;
- un écart entre le premier seuil d'inclinaison et le troisième seuil d'inclinaison est compris entre 5% et 15% d'une valeur du premier seuil d'inclinaison. Préférentiellement, un écart entre le premier seuil d'inclinaison et le troisième seuil d'inclinaison est égal à 10% d'une valeur du premier seuil d'inclinaison. A titre d'exemple non limitatif, si la valeur du premier seuil d'inclinaison est d'un dixième de degré, alors une valeur du troisième seuil d'inclinaison est préférentiellement égale à onze centièmes de degrés ;
- si l'état de fonctionnement du moteur est en cours d'arrêt, le moteur passant d'un état rotatif à un état non rotatif au travers d'une phase transitoire de décélération, alors le seuil d'inclinaison est défini à un quatrième seuil d'inclinaison, une valeur du quatrième seuil d'inclinaison étant supérieure ou égale à la valeur du second seuil d'inclinaison. Le moteur en court d'arrêt est associé à un quatrième état de fonctionnement. Il correspond à une situation durant laquelle le véhicule automobile est immobilisé, et la clef de contact est tournée pour arrêter la rotation du moteur. Dans ce quatrième état de fonctionnement, le moteur est en cours de décélération depuis sa vitesse nominale jusqu'à une vitesse nulle. La valeur du quatrième seuil d'inclinaison est supérieure ou égale à la valeur du second seuil d'inclinaison afin d'éviter que les vibrations introduites par l'arrêt de la rotation du moteur ne déclenchent l'avertisseur du système d'alarme de manière intempestive ;
- un écart entre le premier seuil d'inclinaison et le quatrième seuil d'inclinaison est compris entre 15% et 25% d'une valeur du premier seuil d'inclinaison. Préférentiellement, un écart entre le premier seuil d'inclinaison et le quatrième seuil d'inclinaison est égal à 20% d'une valeur du premier seuil d'inclinaison. A titre d'exemple non limitatif, si la valeur du premier seuil d'inclinaison est d'un dixième de degré, alors une valeur du quatrième seuil d'inclinaison est préférentiellement égale à douze centièmes de degrés ;
- le procédé de contrôle comporte une étape de détermination d'une température du moteur pour la configuration de l'au moins un seuil d'inclinaison. Cette configuration permet d'améliorer la fiabilité et la pertinence du procédé de contrôle selon l'invention, en intégrant dans l'analyse de l'environnement moteur sa température pour définir les différents seuils d'inclinaison prédéfinis. De manière non limitative, la température du moteur est mesurée par l'intermédiaire d'un capteur de température situé à proximité du moteur. Alternativement, la température du moteur est déterminée par l'intermédiaire d'une variable d'environnement disponible sur le réseau interconnecté local du véhicule automobile ;
- si l'état de fonctionnement du moteur est en cours de fonctionnement nominal, le moteur étant en rotation, et que la température du moteur est inférieure à une valeur nominale alors le seuil d'inclinaison est défini à un cinquième seuil d'inclinaison, une valeur du cinquième seuil d'inclinaison étant supérieure à la valeur du troisième seuil d'inclinaison. Le moteur en cours de fonctionnement nominal est associé ici, lorsque la température du moteur est inférieure à sa valeur nominal attendue - par exemple 90°C - à un cinquième état de fonctionnement. Il correspond à une situation durant laquelle le véhicule automobile est en cours d'utilisation, par exemple en cours de roulage ou durant une phase postérieure à la phase de démarrage dudit véhicule automobile alors que la température du moteur n'a pas encore atteint sa valeur nominale, par exemple en hiver ou dans les minutes qui suivent le démarrage du véhicule automobile ;
- un écart entre le premier seuil d'inclinaison et le cinquième seuil d'inclinaison est compris entre 15% et 25% d'une valeur du premier seuil d'inclinaison. Préférentiellement, un écart entre le premier seuil d'inclinaison et le cinquième seuil d'inclinaison est égal à 20% d'une valeur du premier seuil d'inclinaison. A titre d'exemple non limitatif, si la valeur du premier seuil d'inclinaison est d'un dixième de degré, alors une valeur du cinquième seuil d'inclinaison est préférentiellement égale à douze centièmes de degrés.

Selon un deuxième aspect de l'invention, il est proposé un système d'alarme pour véhicule automobile, le système d'alarme comportant (i) un avertisseur, (ii) un capteur d'inclinaison configuré pour mesurer au moins une inclinaison du véhicule automobile, et (iii) une unité de contrôle configurée pour mettre en œuvre le procédé de contrôle conforme au premier aspect de l'invention ou selon l'un quelconque de ses perfectionnements, l'unité de contrôle étant reliée électriquement à l'avertisseur et au capteur d'inclinaison.

Selon un troisième aspect de l'invention, il est proposé un véhicule automobile comportant un système d'alarme conforme au deuxième aspect de l'invention.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique du procédé de contrôle conforme au deuxième aspect de l'invention ;
[Fig.2] illustre une vue schématique d'un véhicule automobile conforme au troisième aspect de l'invention et intégrant un système d'alarme conforme au deuxième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

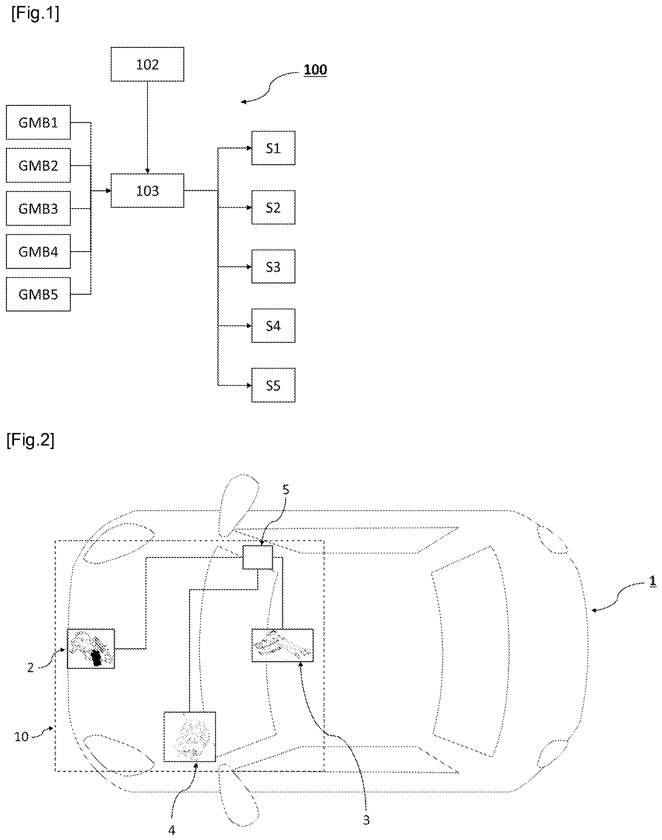

En référence aux FIGURES 1 et 2, le procédé de contrôle 100 d'un système d'alarme 10 pour véhicule automobile 1 comporte une étape de configuration 103 d'au moins un seuil d'inclinaison S1, S2, S3, S4, S5 du véhicule automobile 1 au-delà duquel le système d'alarme 10 est activé en fonction d'au moins un état de fonctionnement GMB1, GMB2, GM3, GMB4, GMB5 d'un moteur dudit véhicule automobile 1.

Un tel système d'alarme 10 est illustré sur la FIGURE 2 : le système d'alarme 10 selon l'invention comporte un avertisseur 4, un capteur d'inclinaison 3 configuré pour mesurer au moins une inclinaison du véhicule automobile 1, et une unité de contrôle 5 configurée pour mettre en œuvre le procédé de contrôle 100 selon l'invention, l'unité de contrôle 5 étant reliée électriquement à l'avertisseur 4 et au capteur d'inclinaison 3.

Le capteur d'inclinaison 3 est configuré pour pouvoir détecter une inclinaison du véhicule automobile selon un axe d'orientation parallèle à un axe longitudinal du véhicule automobile 1 ou parallèle à un axe transversal du véhicule automobile 1 ou orienté suivant n'importe quelle direction. Alternativement, le capteur d'inclinaison est configuré pour pouvoir détecter un dépassement d'une inclinaison par rapport à un seuil d'inclinaison prédéterminé, tel que défini au travers du procédé de contrôle 100 selon l'invention.

De manière complémentaire, le système d'alarme 10 peut aussi comprendre un détecteur d'ouverture de capot 2.

De manière avantageuse, le système d'alarme 10 peut aussi comporter un capteur de température - non représenté sur la FIGURE 2 - du moteur du véhicule automobile 1.

Le procédé de contrôle 100 exploite plusieurs états de fonctionnement GMB1-GMB5 du moteur du véhicule automobile 1 afin de déterminer plusieurs seuils d'inclinaison S1, S2, S3, S4, S5 du véhicule automobile 1 au-delà desquels le système d'alarme 10 est activé de manière à activer l'avertisseur 4.

Dans le procédé de contrôle 100 selon l'invention, et durant l'étape de configuration 103 :
- lorsque le moteur est dans un premier état de fonctionnement GMB1 correspondant au moteur arrêté, le moteur n'étant pas en rotation, alors le seuil d'inclinaison S1-S5 est défini à un premier seuil d'inclinaison S1. Le premier seuil d'inclinaison S1 est minimal de manière à détecter une inclinaison minimale du véhicule automobile 1 et de permettre le déclenchement rapide du système d'alarme 10 et de son avertisseur 4 ;
- lorsque le moteur est dans un deuxième état de fonctionnement GMB2 correspondant au moteur en cours de démarrage, le moteur passant d'un état non rotatif à un état rotatif au travers d'une phase transitoire d'accélération, alors le seuil d'inclinaison S1-S5 est défini à un second seuil d'inclinaison S2 différent du premier seuil d'inclinaison S1. Le second seuil d'inclinaison S2 est supérieur au premier seuil d'inclinaison S1, et préférentiellement maximal afin d'autoriser une certaine inclinaison du véhicule automobile 1 induite par le démarrage du moteur sans activation du système d'alarme 10 et sans déclenchement de l'avertisseur 4 ;
- lorsque le moteur est dans un troisième état de fonctionnement GMB3 correspondant au moteur en cours de fonctionnement nominal, le moteur étant en rotation, alors le seuil d'inclinaison S1-S5 est défini à un troisième seuil d'inclinaison S3. Une valeur du troisième seuil d'inclinaison S3 est comprise entre la valeur du premier seuil d'inclinaison S1 et de celle du second seuil d'inclinaison S2 afin d'autoriser, dans une certaine mesure un inclinaison du véhicule automobile 1 en cours de roulage sans déclenchement du système d'alarme 10 ;
- lorsque le moteur est dans un quatrième état de fonctionnement GMB4 correspondant au moteur en cours d'arrêt, le moteur passant d'un état rotatif à un état non rotatif au travers d'une phase transitoire de décélération, alors le seuil d'inclinaison S1-S5 est défini à un quatrième seuil d'inclinaison S4. Une valeur du quatrième seuil d'inclinaison S4 est supérieure ou égale à la valeur du second seuil d'inclinaison S2. Le quatrième seuil d'inclinaison S4 est supérieur au premier seuil d'inclinaison S1, et préférentiellement égal au second seuil d'inclinaison S2 afin d'autoriser une certaine inclinaison du véhicule automobile 1 induite par les vibrations accompagnant l'arrêt du moteur, sans activation du système d'alarme 10 et sans déclenchement de l'avertisseur 4 ;
- lorsque le moteur est dans un cinquième état de fonctionnement GMB5 correspondant au moteur en cours de fonctionnement nominal, le moteur étant en rotation, et qu'une température 102 du moteur est inférieure à une valeur nominale alors le seuil d'inclinaison S1-S5 est défini à un cinquième seuil d'inclinaison S5. Une valeur du cinquième seuil d'inclinaison S5 est supérieure à la valeur du troisième seuil d'inclinaison S3.

A titre d'exemple non limitatif :
- une valeur du second seuil d'inclinaison S2 est supérieure à celle du premier seuil d'inclinaison S1, préférentiellement d'environ 20% de la valeur du premier seuil d'inclinaison S1 ;
- une valeur du troisième seuil d'inclinaison S3 est supérieure à celle du premier seuil d'inclinaison S1, préférentiellement d'environ 10% de la valeur du premier seuil d'inclinaison S1 ;
- une valeur du quatrième seuil d'inclinaison S4 est supérieure à celle du premier seuil d'inclinaison S1, préférentiellement d'environ 20% de la valeur du premier seuil d'inclinaison S1 ;
- une valeur du cinquième seuil d'inclinaison S5 est supérieure à celle du premier seuil d'inclinaison S1, préférentiellement d'environ 20% de la valeur du premier seuil d'inclinaison S1.

Bien entendu, les valeurs des seuils d'inclinaison S1, S2, S3, S4, S5 dépendent du type de véhicule automobile 1 considéré. A titre d'exemple non limitatif, la valeur du premier seuil d'inclinaison S1 est égale à un dixième de degré. D'une manière générale, elle est inférieure à un degré.

En synthèse, l'invention concerne un procédé de contrôle 100 d'un système d'alarme 10 pour véhicule automobile 1, le procédé de contrôle comportant une étape de configuration 103 qui permet de définir plusieurs seuils d'inclinaison S1, S2, S3, S4, S5 en fonction d'un état de fonctionnement GMB1, GMB2, GMB3, GMB4, GMB5 du véhicule automobile 1 et/ou d'une température 102 du moteur. Le procédé de contrôle 100 permet ainsi d'ajuster les seuils de déclenchement du système d'alarme 10 et de son avertisseur 4 en fonction de certaines phases spécifique du véhicule automobile 1, liées à son utilisation et plus particulièrement à l'état de fonctionnement GMB1, GMB2, GMB3, GMB4, GMB5 du moteur.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de contrôle (100) d'un système d'alarme (10) pour véhicule automobile (1), le procédé de contrôle (100) comportant une étape de configuration d'au moins un seuil d'inclinaison (S1, S2, S3, S4, S5) du véhicule automobile (1) au-delà duquel le système d'alarme (10) est activé en fonction d'au moins un état de fonctionnement (GMB1, GMB2, GMB3, GMB4, GMB5) d'un moteur dudit véhicule automobile (1), le procédé de contrôle (100) comportant également une étape de détermination d'une température du moteur pour la configuration de l'au moins un seuil d'inclinaison (S1, S2, S3, S4, S5).

2. Procédé de contrôle (100) selon la revendication précédente, dans lequel, si l'état de fonctionnement (GMB1, GMB2, GMB3, GMB4, GMB5) du moteur est arrêté, le moteur n'étant pas en rotation, alors le seuil d'inclinaison (S1, S2, S3, S4, S5) est défini à un premier seuil d'inclinaison (S1), et si l'état de fonctionnement (GMB1, GMB2, GMB3, GMB4, GMB5) du moteur est en cours de démarrage, le moteur passant d'un état non rotatif à un état rotatif au travers d'une phase transitoire d'accélération, alors le seuil d'inclinaison (S1, S2, S3, S4, S5) est défini à un second seuil d'inclinaison (S2) différent du premier seuil d'inclinaison (S1).

3. Procédé de contrôle (100) selon la revendication précédente, dans lequel une valeur du premier seuil d'inclinaison (S1) est minimale.

4. Procédé de contrôle (100) selon l'une quelconque des revendications 2 ou 3, dans lequel une valeur du second seuil d'inclinaison (S2) est supérieure à la valeur du premier seuil d'inclinaison (S1).

5. Procédé de contrôle (100) selon l'une quelconque des revendications 2 à 4, dans lequel, si l'état de fonctionnement (GMB1, GMB2, GMB3, GMB4, GMB5) du moteur est en cours de fonctionnement nominal, le moteur étant en rotation, alors le seuil d'inclinaison (S1, S2, S3, S4, S5) est défini à un troisième seuil d'inclinaison (S3), une valeur du troisième seuil d'inclinaison (S3) étant comprise entre la valeur du premier seuil d'inclinaison (S1) et de celle du second seuil d'inclinaison (S2).

6. Procédé de contrôle (100) selon l'une quelconque des revendications 2 à 5, dans lequel, si l'état de fonctionnement (GMB1, GMB2, GMB3, GMB4, GMB5) du moteur est en cours d'arrêt, le moteur passant d'un état rotatif à un état non rotatif au travers d'une phase transitoire de décélération, alors le seuil d'inclinaison (S1, S2, S3, S4, S5) est défini à un quatrième seuil d'inclinaison (S4), une valeur du quatrième seuil d'inclinaison (S4) étant supérieure ou égale à la valeur du second seuil d'inclinaison (S2).

7. Procédé de contrôle (100) selon la revendication 1 prise en combinaison avec la revendication 5, dans lequel, si l'état de fonctionnement (GMB1, GMB2, GMB3, GMB4, GMB5) du moteur est en cours de fonctionnement nominal, le moteur étant en rotation, et que la température du moteur est inférieure à une valeur nominale alors le seuil d'inclinaison (S1, S2, S3, S4, S5) est défini à un cinquième seuil d'inclinaison (S5), une valeur du cinquième seuil d'inclinaison (S5) étant supérieure à la valeur du troisième seuil d'inclinaison (S3).

8. Système d'alarme (10) pour véhicule automobile (1), le système d'alarme (10) comportant :
- un avertisseur (4) ;
- un capteur d'inclinaison (3) configuré pour mesurer au moins une inclinaison du véhicule automobile (1) ;
- une unité de contrôle (5) configurée pour mettre en œuvre le procédé de contrôle (100) selon l'une quelconque des revendications précédentes, l'unité de contrôle (5) étant reliée électriquement à l'avertisseur (4) et au capteur d'inclinaison (3).

9. Véhicule automobile (1) comportant un système d'alarme (10) selon la revendication précédente. 1

## Patentansprüche

1. Verfahren zur Steuerung (100) eines Alarmsystems (10) für ein Kraftfahrzeug (1), wobei das Verfahren zur Steuerung (100) einen Schritt zur Konfiguration wenigstens einer Neigungsschwelle (S1, S2, S3, S4, S5) des Kraftfahrzeugs (1) umfasst, bei deren Überschreitung das Alarmsystem (10) in Abhängigkeit von wenigstens einem Betriebszustand (GMB1, GMB2, GMB3, GMB4, GMB5) eines Motors des Kraftfahrzeugs (1) aktiviert wird, wobei das Verfahren zur Steuerung (100) auch eine Schritt zur Bestimmung der Motortemperatur für die Konfiguration mindestens einer Neigungsschwelle (S1, S2, S3, S4, S5).

2. Steuerverfahren (100) nach dem vorhergehenden Anspruch, bei dem, wenn der Betriebszustand (GMB1, GMB2, GMB3, GMB4, GMB5) des Motors angehalten wird, der Motor nicht gedreht wird, dann der Neigungsschwellenwert (S1, S2, S3, S4, S5) auf einen ersten Neigungsschwellenwert (S1) festgelegt wird, und wenn der Betriebszustand (GMB1, GMB2, GMB3, GMB4, GMB5) des Motors gestartet wird, der Motor von einem nicht-rotierenden Zustand in einen rotierenden Zustand übergeht während einer Übergangszeit für das Beschleunigen wird die Neigungsschwelle (S1, S2, S3, S4, S5) auf eine zweite Neigungsschwelle (S2) festgelegt, die sich von der ersten Neigungsschwelle (S1) unterscheidet.

3. Steuerverfahren (100) nach dem vorhergehenden Anspruch, wobei ein Wert des ersten Neigungsschwellwerts (S1) minimal ist.

4. Steuerverfahren (100) nach einem der Ansprüche 2 oder 3, wobei ein Wert des zweiten Neigungsschwellwerts (S2) größer als der Wert des ersten Neigungsschwellwerts (S1) ist.

5. Steuerverfahren (100) nach einem der Ansprüche 2 bis 4, bei dem, wenn der Betriebszustand (GMB1, GMB2, GMB3, GMB4, GMB5) des Motors während des nominalen Betriebs des Motors gedreht wird, dann der Neigungsschwellenwert (S1, S2, S3, S4, S5) auf einen dritten Neigungsschwellenwert (S3) festgelegt wird, wobei ein Wert des dritten Neigungsschwellenwerts (S3) zwischen dem Wert des ersten Neigungsschwellenwerts (S1) und dem des zweiten Neigungsschwellenwerts liegt (S2).

6. Steuerverfahren (100) nach einem der Ansprüche 2 bis 5, wobei, wenn der Betriebszustand (GMB1, GMB2, GMB3, GMB4, GMB5) des Motors angehalten wird, der Motor von einem rotierenden in einen nicht rotierenden Zustand durch eine Verzögerungsübergangsphase wechselt, dann der Neigungsschwellenwert (S1, S2, S3, S4, S5) auf einen vierten Neigungsschwellenwert (S4) festgelegt wird, wobei ein Wert des vierten Neigungsschwellenwerts (S4) größer oder gleich dem Wert des zweiten Schwellwerts ist Neigungswinkel (S2).

7. Steuerverfahren (100) nach Anspruch 1 in Kombination mit Anspruch 5, wobei, wenn der Motorbetriebszustand (GMB1, GMB2, GMB3, GMB4, GMB5) in einem nominalen Betrieb ist, der Motor gedreht wird, und die Motortemperatur kleiner als ein nominaler Wert ist, dann der Neigungsschwellenwert (S1, S2, S3, S4, S5) auf einen fünften Neigungsschwellenwert (S5) festgelegt wird, wobei ein Wert des fünften Neigungsschwellenwerts (S5) größer als der Wert des dritten Neigungsschwellenwerts ist (S3).

8. Alarmsystem (10) für ein Kraftfahrzeug (1), wobei das Alarmsystem (10) umfasst:
- eine Warnvorrichtung (4);
- einen Neigungssensor (3), der so konfiguriert ist, dass er mindestens eine Neigung des Kraftfahrzeugs (1) misst;
- eine Steuereinheit (5), die so konfiguriert ist, dass sie das Steuerverfahren (100) nach einem der vorhergehenden Ansprüche ausführt, wobei die Steuereinheit (5) elektrisch mit der Warnvorrichtung (4) und dem Neigungssensor (3) verbunden ist.

9. Kraftfahrzeug (1) mit einem Alarmsystem (10) nach dem vorhergehenden Anspruch.

## Claims

1. Method (100) for controlling an alarm system (10) for a motor vehicle (1), the control method (100) comprising a step of configuring at least one inclination threshold (S1, S2, S3, S4, S5) of the motor vehicle (1) beyond which the alarm system (10) is activated according to at least one operating status (GMB1, GMB2, GMB3, GMB4, GMB5) of an engine of said motor vehicle (1), the control method (100) also comprising a step of determining an engine temperature for the configuration of the at least one inclination threshold (S1, S2, S3, S4, S5).

2. Control method (100) according to the previous claim, in which, if the operating status (GMB1, GMB2, GMB3, GMB4, GMB5) of the engine is stopped, the engine not being in rotation, then the inclination threshold (S1, S2, S3, S4, S5) is defined at a first inclination threshold (S1), and if the operating status (GMB1, GMB2, GMB3, GMB4, GMB5) of the engine is in progress to start, the engine running from a non-rotating status to a rotating status through a transient acceleration phase, then the inclination threshold (S1, S2, S3, S4, S5) is defined at a second inclination threshold (S2) different from the first inclination threshold (S1).

3. A control method (100) according to the previous claim, in which a value of the first inclination threshold (S1) is minimal.

4. A control method (100) according to any one of claims 2 or 3, in which a value of the second inclination threshold (S2) is greater than the value of the first inclination threshold (S1).

5. Control method (100) according to any one of claims 2 to 4, in which, if the operating status (GMB1, GMB2, GMB3, GMB4, GMB5) of the engine is in progress of nominal operation, the engine being in rotation, then the inclination threshold (S1, S2, S3, S4, S5) is defined at a third inclination threshold (S3), a value of the third inclination threshold (S3) being between the value of the first inclination threshold (S1) and that of the second threshold inclination (S2).

6. Control method (100) according to any one of claims 2 to 5, in which, if the operating status (GMB1, GMB2, GMB3, GMB4, GMB5) of the engine is in progress in shutdown, the engine passing from a rotary status to a non-rotary status through a transient deceleration phase, then the inclination threshold (S1, S2, S3, S4, S5) is defined at a fourth inclination threshold (S4), a value of the fourth inclination threshold (S4) being greater than or equal to the value of the second inclination threshold (S2).

7. Control method (100) according to claim 1 taken in combination with claim 5, in which, if the operating status (GMB1, GMB2, GMB3, GMB4, GMB5) of the engine is in progress of nominal operation, the engine being in rotation, and the temperature of the engine is less than a nominal value then the inclination threshold (S1, S2, S3, S4, S5) is defined at a fifth inclination threshold (S5), a value of the fifth inclination threshold (S5) being greater than the value of the third threshold inclination (S3).

8. Alarm system (10) for a motor vehicle (1), the alarm system (10) comprising:
- a warning device (4);
- an inclination sensor (3) configured to measure at least one inclination of the motor vehicle (1);
- a control unit (5) configured to implement the control method (100) according to any one of the previous claims, the control unit (5) being electrically connected to the warning device (4) and to the inclination sensor (3).

9. Motor vehicle (1) comprising an alarm system (10) according to the previous claim.
